# EUROPEAN PATENT SPECIFICATION

(11) **EP 4 591 331 B1**
(45) Date of publication and mention of the grant of the patent: **12.08.2026**
(21) Application number: 23772139.4
(22) Date of filing: 11.09.2023
(51) Int. Cl.: H01B 3/30, C08L 77/06, C08K 5/5313, C08J 5/18

(54) **INSULATION FILM**
ISOLATIONSFILM
FILM ISOLANT

(30) Priority: 23.09.2022 WO PCT/CN2022/120823
(43) Date of publication of application: 30.07.2025
(73) Proprietor: BASF SE, 67056 Ludwigshafen am Rhein (DE)
(72) Inventor: ROTH, Michael, 67056 Ludwigshafen am Rhein (DE); ZHANG, Ya Qin, Shanghai 200137 (CN); FANG, Yuan, Shanghai 200137 (CN)
(74) Representative: BASF IP Association
(86) International application number: PCT/EP2023/074916
(87) International publication number: WO 2024/061681

(56) References cited:
- WO-A1-2019/060117
- WO-A1-2020/234173
- JP-A- 2000 186 141
- US-A1- 2010 113 657
- US-A1- 2011 021 676
- HORROCKS A R ET AL: "The combined effects of zinc stannate and aluminium diethyl phosphinate on the burning behaviour of glass fibre-reinforced, high temperature polyamide (HTPA)", POLYMER DEGRADATION AND STABILITY, vol. 104, 1 January 2014 (2014-01-01), pages 95 - 103, XP028659329, ISSN: 0141-3910, DOI: 10.1016/J.POLYMDEGRADSTAB.2014.03.027

## Description

### Field of the invention

The present invention relates to a novel use of a polyamide-based composition, and an insulation film prepared by said polyamide-based composition with excellent dielectrical strength, high volume resistivity, and outstanding flame retardancy performance, which can be used in various technical fields, particularly in Electrical & Electronic systems, new energy automobile, electrical insulation materials for motors (of which a coil bobbin comprising the insulation film), insulation jackets, and heat-resistant parts or components.

### Background of the Invention

An electric motor or a motor generator is necessary for an electric vehicle or a hybrid car. For electric motors application, insulation and heat resistance is demanding property for devices like winding insulation of motors, electrical coils, wires and cables, and as a capacitor medium that need products in film or paper shape. Material that used to make such device should be robust enough to make sure safety regarding insulation. Such a film is generally made of a synthetic resin.

JPH11341714A disclosed a motor stator having a covering member made of polyphenylene sulfide and glass fiber. The thickness of such covering member can't fulfil the thickness requirement of insulation sheet.

JP 2008-263704 disclosed an insulating paper comprising heat resistant sheets, which are made of aromatic polyamide fibers and on both sides of the insulating paper. Adhesive is used to connect the insulating paper and the resin molded body.

WO2015033696 disclosed a motor bobbin, in which the insulating sheet is impregnated with the resin molded body without using an adhesive. The surface of the insulating sheet is made of aramid paper which is made of aramid fibrids and aramid short fibers. Aramid insulating paper is made of chopped fiber or precipitated fiber by wet papermaking process and formed by hot pressing process which is a good solution as high melt temperature, super heat resistance and insulation performance, intrinsic flame retardancy properties and super chemical resistance.

However, aramid insulating paper is quite expensive. Improvements were developed to save the cost and reduce the property sacrifice by using impregnation or lamination. One example is composite of polymer film and polymer fiber, such as polyester film and polyester fiber, polyester film and polyaramid fiber, polyimide film and polyaramid fiber, etc. The composite material has the comprehensive characteristics of film material and fiber material, which obviously improves the tear resistance and impregnation of the insulating material, has better performance than a single material, and is easy to use. However, the cost of the composite is still in a high level.

Polyester film, such as polyethylene terephthalate films are widely used in various industrial applications. But the heat resistance and dimensional stability of polyester film can't meet the requirement of practical industrial uses.

JP2000186141A disclosed a semi-aromatic polyamide sheet. However, a larger number of fisheyes was generated during the manufacturing process. JP2018135414A also disclosed a semi-aromatic polyamide sheet comprising black pigment which is used for laser welding. However, it can't be use as insulation film either. WO 2020234173 A1 discloses flame retardant polyamide compositions which are used for the production of packaging films, packaging sleeves and as an insulation coating for an electrical conductor.

These improvements still do not satisfy the practical application, the insulation film which has low thickness, good flame retardancy, strong dielectrical strength, high volume resistivity and low cost is needed.

### Summary of the invention

It is an object of the present invention to provide a novel use of a polyamide-based composition in the preparation of an insulation film.

It was surprisingly found by the inventors that an insulation film with a dielectrical strength of at least more than 40 KV/mm at room temperature can be achieved through extruding a polyamide-based composition, following by stretching, heat fixing and cooling procedures. Said polyamide-based composition comprises:
A) from 69 to 89.9% by weight of a polyamide,
B) from 10 to 25% by weight of a flame retardant,
C) from 0.1 to 1.0% by weight of an acid scavenger,
D) from 0 to 5% by weight of further additives,
wherein the total percentage by weight of components A) to D) is 100%.

It is another object of the present invention to provide an insulation film, which shows excellent dielectrical strength, high volume resistivity, and outstanding flame retardancy performance.

The insulation film in the present invention shows excellent flame retardancy which can approach V-0 UL94 VTM for specimen with thickness of 0.20 mm, V-0 UL94 for specimen with thickness of 0.8mm.

The insulation film in the present invention can pass the GWFI (glow-wire flammability index) test according to DIN EN 60695-2-12 at 960 °C for the specimen with thickness of 0.75mm and 1.5mm.

The insulation film in the present invention has a dielectrical strength of more than 40 KV/mm measured under conditioned status at room temperature according to IEC 60243-1 in Midel 7131 ester liquid.

The insulation film in the present invention has a dielectrical strength of more than 70 KV/mm measured under dried status at room temperature according to IEC 60243-1 in Midel 7131 ester liquid.

The insulation film in the present invention has a dielectrical strength of more than 40 KV/mm measured under dried status at 150°C according to IEC 60243-1 in Midel 7131 ester liquid.

The insulation film in the present invention has a dielectrical strength drop at 120°C of no more than 40%, perferably 35%, compared to the dielectrical strength at room temperature measured under dried status according to IEC 60243-1 in Midel 7131 ester liquid.

The insulation film in the present invention has a dielectrical strength drop at 150°C of no more than 45%, perferably 37%, compared to the dielectrical strength at room temperature measured under dried status according to IEC 60243-1 in Midel 7131 ester liquid.

It is yet another object of the present invention to provide use of said insulation film, particularly for producing components in electrical and electronic systems, new electric vehicles, and electrical insulation parts for motors (such as a coil bobbin).

### Detailed description of the invention

Unless defined otherwise, all technical and scientific terms used herein have the meaning commonly understood by a person skilled in the art to which the invention belongs. The radical definitions or elucidations given above in general terms or within areas of preference apply to the end products and correspondingly to the starting materials and intermediates. These radical definitions can be combined with one another as desired, i.e., including combinations between the general definition and/or the respective ranges of preference and/or the embodiments.

All the embodiments and the preferred embodiments disclosed herein can be combined as desired, which are also regarded as being covered within the scope of the present invention.

The terms "a", "an" and "the" are used interchangeable with the term "at least one". The phrases "at least one of" and "comprises at least one of" followed by a list refers to any one of the items in the list and any combination of two or more item in the list. All numerical ranges are inclusive of their endpoints and non-integral values between the endpoints unless otherwise stated.

The term "about" refers to a range of numbers that a person of skill in the art would consider equivalent to the recited value in the context of achieving the same function or result.

Unless otherwise identified, all percentages (%) are "percent by weight".

The term "unit" refers to a repeated unit constituting the polyamide, unless otherwise stated.

As used herein, the term "PA" refers to polyamide. The term "PA*/PA**" refers to copolymer of PA* and PA**.

Disclosed is an insulation film comprising:
A) from 69 to 89.9% by weight of a polyamide,
B) from 10 to 25% by weight of a flame retardant,
C) from 0.1 to 1.0% by weight of an acid scavenger,
D) from 0 to 5% by weight of further additives,
wherein the total percentage by weight of components A) to D) is 100%.

In a preferred embodiment, said insulation film comprising:
A) from 72 to 78.7% by weight of a polyamide,
B) from 19.85 to 23% by weight of a flame retardant,
C) from 0.15 to 0.4% by weight of an acid scavenger,
D) from 1.3 to 4.6% by weight of further additives,
wherein the total percentage by weight of components A) to D) is 100%.

Preferably, the polyamide is selected from at least one semi-crystalline semi-aromatic polyamide that has crystalline domains as demonstrated by the presence of a melting peak with a melting enthalpy of at least 5 J/g measured by differential scanning calorimetry (DSC) according to ISO11357 at a heating rate of 10K/min.

The semi-crystalline semi-aromatic polyamide in the present invention comprises dicarboxylic acid units, diamine units, and optionally units derived from other monomers such as amino acids and/or lactam units, the dicarboxylic acid units or diamine units having aromatic groups. For example, the semi-aromatic polyamide comprises aromatic dicarboxylic acid units and aliphatic diamine units, or aliphatic and/or cycloaliphatic dicarboxylic acid units and aromatic diamine units.

The aromatic dicarboxylic acid unit can be typically derived from aromatic dicarboxylic acid. The aliphatic dicarboxylic acid unit can be typically derived from aliphatic dicarboxylic acid and/or aliphatic dicarboxylic acid chloride. The cycloaliphatic dicarboxylic acid unit can be typically derived from cycloaliphatic dicarboxylic acid and/or cycloaliphatic dicarboxylic acid chloride.

The aliphatic or aromatic diamine units can be typically derived from aliphatic diamine or aromatic diamine respectively.

The other monomers are preferably in an amount of from 0 to 20 mol%, preferably from 0 to 15 mol%, more preferably from 0 to 10 mol%, based on the total units constituting the semi-crystalline semi-aromatic polyamide.

The aromatic dicarboxylic acid in the present invention preferably comprises from 8 to 20 carbon atoms, more preferably from 8 to 14 carbon atoms, such as terephthalic acid, isophthalic acid, naphthalene dicarboxylic acids and/or diphenyl dicarboxylic acids, more preferably is terephthalic acid, naphthalene dicarboxylic acid, a mixture of terephthalic acid and isophthalic acid, a mixture of terephthalic and naphthalene dicarboxylic acid.

The aliphatic dicarboxylic acid in the present invention preferably comprises from 4 to 36 carbon atoms, more preferably from 5 to 36 carbon atoms, most preferably from 5 to 20 carbon atoms or 36 carbon atoms, such as 5, 6, 9, 10, 11, 12, 13, 14, 15, 16, 17, 18 and/or 36 carbon atoms. Examples of the aliphatic dicarboxylic acid are succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanoic acid, hexadecanedioic acid, octadecanedioic acid, dimer acid having 36 carbon atoms and mixtures thereof, more preferably is adipic acid, azelaic acid, sebacic acid, dodecanedioic acid and mixtures thereof.

The aliphatic dicarboxylic acid chloride in the present invention preferably comprises from 9 to 36 carbon atoms, more preferably has from 9 to 20 carbon atoms, more preferably has 9, 10, 11, 12, 13, 14, 15, 16, 17, 18 carbon atoms. The examples of the aliphatic dicarboxylic acid chloride are azelaoyl chloride, sebacoyl chloride, undecanedioyl dichloride, and mixtures thereof.

The cycloaliphatic dicarboxylic acid in the present invention preferably comprises from 4 to 20 carbon numbers, more preferably from 8 to 20 carbon numbers, more preferably comprises one carbon backbone selected from the group consisting of cyclohexane, cyclopentane, cyclohexylmethane, dicyclohexylmethane, bis(methylcyclohexyl) and mixtures thereof, most preferably is selected from the group consisting of cis- and trans- cyclopentane-1,3-dicarboxylic acid, cis- and trans- cyclopentane-1,4-dicarboxylic acid, cis- and trans- cyclohexane-1,2-dicarboxylic acid, cis- and trans-cyclohexane-1,3-dicarboxylic acid, cis- and trans-cyclohexane-1,4-dicarboxylic acid and mixtures thereof.

The aliphatic diamine in the present invention could be linear aliphatic diamine or branched aliphatic diamine, preferably is linear aliphatic diamine. The aliphatic diamine preferably comprises from 4 to 36, more preferably from 4 to 22 carbon atoms or 36 carbon atoms, most preferably from 4 to 14 carbon atoms, such as 4, 5, 6, 8, 9, 10, 11, 12, 13 and 14 carbon atoms. Examples of the linear aliphatic diamines are 1,4-butane diamine, 1,5-pentane diamine, 1,6-hexane diamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,16-hexadecanediamine, 1,18-octadecanediamine, 1,20-eicosanediamine, 1,22-docosanediamine and mixtures thereof, preferably is 1,6-hexane diamine, 1,8-octanediamine, 1,9-nonanediamine, 1,10-decanediamine, 1,11-undecanediamine, 1,12-dodecanediamine and mixtures thereof, more preferably is 6-hexane diamine, 1,8-octanediamine, 1,9-nonanediamine, 1,10-decanediamine, 1,11-undecanediamine, 1,12-dodecanediamine and mixtures thereof. Examples of the branched aliphatic diamines are 2-methyl-1,5-pentane diamine, 3-methyl-1,5-pentane diamine, 2-methyl-1,8-octanediamine, 5-methyl-1,9-nonanediamine, 2,4,4-trimethylhexamethylene diamine, 2,2,4-trimethylhexamethylene diamine, 2,4-dimethyloctanediamine and mixtures thereof, preferably is 2-methyl-1,5-pentane diamine, 3-methyl-1,5-pentane diamine, 2-methyl-1,8-octanediamine, 2,4,4-trimethylhexamethylene diamine, 2,2,4-trimethylhexamethylene diamine and mixtures thereof.

The aromatic diamine in the present invention is preferably selected from the group consisting of m-xylylenediamine (MXD), p-xylylenediamine (PXD), bis(4-aminophenyl)methane, 3-methylbenzidine, 2,2-bis(4-aminophenyl)propane, 1,1-bis(4-aminophenyl)cyclohexane, 1,2-diaminobenzene, 1,3-diaminobenzene, 1,4-diaminobenzene, 1,2-diaminonaphthalene, 1,3-diaminonaphthalene, 1,4-diaminonaphthalene, 2,3-diaminotoluene, N,N'-dimethyl-4,4'-bephenyldiamine, bis(4-methylaminophenyl)methane, 2,2'-bis(4-methylaminophenyul)propane and mixtures thereof, more preferably is MXD and/or PXD.

The suitable amino acid in the present invention preferably comprises from 4 to 20 carbon atoms, more preferably from 4 to 14 carbon atoms, such as 9, 10, 11, 12 or 13 carbon atoms. Examples of the amino acid are 4-aminobutanoic acid, 6-aminocaproic acid, 7-aminoheptanoic acid, 8-aminooctanoic acid, 9-aminononanoic acid, 10-aminodecanoic acid, 11-aminoundecanoic acid, 12-aminododecanoic acid and mixtures thereof.

The suitable lactam in the present invention preferably comprises from 4 to 12 carbon atoms, more preferably from 5 to 12 carbon atoms. Examples of the lactam are 2-pyrrolidone (γ-butyrolactam), 2-piperidone (δ-valerolactam), ε-caprolactam, capryllactam, decanelactam, un-decanolactam, enantholactam and/or lauryllactam, preferably is ε-caprlactam and/or undecano-lactam.

In a preferred embodiment of the present invention, the semi-crystalline semi-aromatic polyamide comprises dicarboxylic acid units and diamine units, and 0 to 20 mol% of units derived from amino acids and/or lactams, based on the total mole of units constituting the semi-crystalline semi-aromatic polyamide;
i. wherein the dicarboxylic acid unit is derived from aromatic dicarboxylic acid (a-1), or a combination of the aromatic dicarboxylic acid (a-1) and the other dicarboxylic acid (a-2) including aliphatic dicarboxylic acid (a-3) and/or cycloaliphatic dicarboxylic acid. The aromatic dicarboxylic acid (a-1) is preferably in an amount of 60-100 mol%, the other dicarboxylic acid (a-2) is preferably in an amount of 0-40 mol%, based on the total mole of the dicarboxylic acid units constituting the semi-crystalline semi-aromatic polyamide;
   the diamine unit is derived from aliphatic diamine (b-1), or a combination of aliphatic diamine (b-1) and aromatic diamine (b-2). The aliphatic diamine (b-1) is preferably in an amount of 80-100 mol%, the aromatic diamine (b-2) is preferably in an amount of 0-20 mol%, based on the total mole of the diamine units constituting the semi-crystalline semi-aromatic polyamide; or
ii. wherein the dicarboxylic acid unit is derived from aliphatic dicarboxylic acid (a-3) or a combination of aliphatic dicarboxylic acid (a-3) and cycloaliphatic dicarboxylic acid. The aliphatic dicarboxylic acid (a-3) is preferably in an amount of 80-100 mol%, the cycloaliphatic dicarboxylic acid is preferably in an amount of 0-20 mol%, based on the total mole of the dicarboxylic acid units constituting the semi-crystalline semi-aromatic polyamide;
   the diamine unit is derived from aromatic diamine (b-2), or a combination of aromatic diamine (b-2) and aliphatic diamine (b-1). The aromatic diamine (b-2) is preferably in an amount of 80-100 mol%, the aliphatic diamine (b-1) is preferably in an amount of 0-20 mol%, based on the total mole of the diamine units constituting the semi-crystalline semi-aromatic polyamide.

In one preferred embodiment, the semi-crystalline semi-aromatic polyamide comprises dicarboxylic acid units and diamine units, wherein the dicarboxylic acid unit is derived from aromatic dicarboxylic acid (a-1), or a combination of the aromatic dicarboxylic acid (a-1) and the other dicarboxylic acid (a-2) including aliphatic dicarboxylic acid (a-3) and/or cycloaliphatic dicarboxylic acid. The aromatic dicarboxylic acid (a-1) is terephthalic acid, naphthalene dicarboxylic acid, biphenyl dicarboxylic acid, a combination of terephthalic acid and isophthalic acid, or a combination of terephthalic acid and naphthalene dicarboxylic acid; the aromatic dicarboxylic acid (a-1) is preferably in an amount of 60-100 mol%, more preferably 80-100 mol%, furthermore preferably 90-100 mol%, most preferably 95-100 mol%, based on the total mole of the dicarboxylic acid units constituting the semi-crystalline semi-aromatic polyamide; the other dicarboxylic acid (a-2) is preferably in an amount of 0-40 mol%, more preferably 0-20 mol%, furthermore preferably 0-10 mol%, most preferably is equal to or less than 5 mol%, based on the total mole of the dicarboxylic acid units constituting the semi-crystalline semi-aromatic polyamide;
the diamine unit is derived from aliphatic diamine (b-1), or a combination of aliphatic diamine (b-1) and aromatic diamine (b-2). The aliphatic diamine (b-1) is preferably in an amount of 80-100 mol%, more preferably 90-100 mol%, most preferably 95-100 mol%, based on the total mole of the diamines constituting the semi-crystalline semi-aromatic polyamide; the aromatic diamine (b-2) is preferably in an amount of 0-20 mol%, more preferably is 0-10 mol%, most preferably is 0-5 mol%, based on the total mole of the diamine units constituting the semi-crystalline semi-aromatic polyamide.

In one preferred embodiment, the semi-crystalline semi-aromatic polyamide comprises dicarboxylic acid units and diamine units, the dicarboxylic acid unit is derived from aromatic dicarboxylic acid (a-1) and 0-10 mol%, more preferably 0-5 mol% of the other dicarboxylic acid (a-2), wherein the aromatic dicarboxylic acid (a-1) includes 10-40 mol%, more preferably 15-30 mol%, most preferably 20-30 mol% of isophthalic acid and 60-90 mol%, more preferably 70-85 mol%, most preferably 70-80 mol% of at least one aromatic dicarboxylic acid selected from the group consisting of terephthalic acid, naphthalene dicarboxylic acid and biphenyl dicarboxylic acid, preferably is terephthalic acid or a combination of terephthalic acid and naphthalene dicarboxylic acid; the other dicarboxylic acid is (a-2) is aliphatic dicarboxylic acid and/or cycloaliphatic dicarboxylic acid; the mole percentage is based on the total mole of the dicarboxylic acid units constituting the semi-crystalline semi-aromatic polyamide;
the diamine unit is derived from aliphatic diamine (b-1), or a combination of aliphatic diamine (b-1) and aromatic diamine (b-2). The aliphatic diamine (b-1) is preferably in an amount of equal to or 90-100 mol%, more preferably 95-100 mol%; the aromatic diamine (b-2) is preferably in an amount of 0-10 mol%, more preferably 0-5 mol%, based on the total mole of the diamine units constituting the semi-crystalline semi-aromatic polyamide.

In one more preferred embodiment, the aliphatic dicarboxylic acid (a-3) of the other dicarboxylic acid (a-2) is preferably glutaric acid, adipic acid, suberic acid, azelaic acid, sebacic acid, undecanedioic acid, dodecanedioic acid, tridecanedioic acid, tetradecanedioic acid, pentadecanoic acid, hexadecanedioic acid, and octadecanedioic acid, more preferably is glutaric acid, adipic acid, sebacic acid and/or dodecanedioic acid.

In one more preferred embodiment, the aliphatic diamine (b-1) is a linear aliphatic diamine (b-1a) or the combination of a linear aliphatic diamine and a branched aliphatic diamine (b-1b). The linear aliphatic diamine (b-1a) is preferably selected from the group consisting of 1,4-butane diamine, 1,5-pentane diamine, 1,6-hexane diamine, 1,8-octanediamine, 1,9-nonanediamine, 1,10-decanediamine, 1,11-undecanediamine and 1,12-dodecanediamine. The branched aliphatic diamine(b-1b) is preferably selected from the group consisting of 2-methyl-1,5-pentane diamine, 3-methyl-1,5-pentane diamine, 2-methyl-1,8-octanediamine, 2,4,4-trimethylhexamethylene diamine and 2,2,4-trimethylhexamethylene diamine.

Examples of the semi-crystalline semi-aromatic polyamide is polyamide MXD5, polyamide PXD5, polyamide MXD6, polyamide PXD6, polyamide MXD9, polyamide PXD9, polyamide MXD10 and/or polyamide PXD10.

The polyamide in the present invention could comprise a polyamide copolymer or a blend of two or more polyamide and its copolymer.

The semi-crystalline semi-aromatic polyamide is suitably represented by the notations,
- R represents one or more of linear aliphatic diamine and branched aliphatic diamine,
- T represents terephthalic acid,
- I represents isophthalic acid,
- A represents one or more of aromatic diamine,
- Y represents one or more of aliphatic dicarboxylic acid,
- V represent one or more of lactam.

The suitable semi-crystalline semi-aromatic polyamide could be represented by PA RT, PA RT/RI, PA RT/BT, PA RT/BT/RI/BI, which comprising:
- 60-100 mol% of (T), 0-40 mol% of (I), preferably 60-85 mol% of (T), 15-40 mol% of (I), more preferably 65-80 mol% of (T), 20-35 mol% of (I); based on the total mole of (T) +(I); and
- 100 mol% of (R), R is preferably the linear or branched aliphatic polyamide having from 4 to 36 carbon numbers, more preferably having from 5 to 18 carbon numbers, most preferably having from 6 to 12 carbon numbers. The examples of these polyamides include PA 4T/4I, PA 4T/6I, PA5T, PA 5T/5I, PA 6T, PA 6T/6I, PA 6T/8T, PA 6T/10T, PA 6T/10I, PA 9T, PA 10T, PA 12T, PA 10T/10I, PA 6T/9T, PA 6T/12T, PA 4T/6T/DT, PA 4T/10T/DT, PA 4T/4I/6T/6I/DT/DI, PA6T/12T/6I/12I PA 6T/10T/6I, PA 4T/6T/4I/6I, PA 5T/6T/5I/6I, PA 5T/4T/5I/4I, PA 4T/10T/5I/10I, PA 4T/6T/DT, PA 4T/10T/DT or PA4T/4I/6T/6I/DT/DI, preferably is PA5T, PA6T, PA9T, PA10T, PA 6T/6I, PA 6T/10T, PA6T/12T, PA 6T/10T/6I, PA 6T/DT or PA 6T/DT/6I/DI. Herein D is 2-methylpenta-methylenediamine or 3-methyl-1,5-pentanedimine, or a mixture thereof, and D is in an amount of 0-20 mol%, preferably 0-10 mol% of the total mole of (R).

In one preferred embodiment, the semi-crystalline semi-aromatic polyamide is PA 6T/6I comprising 65-80 mol% of (T), 20-35 mol% of (I).

In one preferred embodiment, the semi-crystalline semi-aromatic polyamide is PA 6T/10T comprising 10-60 mol% of (6T), 40-90 mol% of (10T), preferably 10-40 mol% of (6T), 60-90 mol% of (10T).

In one preferred embodiment, the semi-crystalline semi-aromatic polyamide is PA 6T/10T/6I comprising 60-90 mol% of (6T), 5-40 mol% of (6I) and 5-45 mol% of (10T).

In one preferred embodiment, the semi-crystalline semi-aromatic polyamide is PA 6T/10T/6 comprising 60-85 mol% of (6T), 15-40 mol% of (10T), and 5-15 mol% of caprolactam.

The suitable semi-crystalline semi-aromatic polyamide could be represented by PA RT/RY, PA RT/V, PA RT/RI/RY or PA RT/RI/V, which comprising:
60-100 mol% of (T), 0-40 mol% of (I); 0-10 mol% of (V), preferably 0-5 mol% of (V); 0-80 mol% of (Y), preferably 0-60 mol% of (Y), more preferably 0-40 mol% of (Y); based on the total mole of (T)+(I)+(V)+(Y); R is preferably the linear aliphatic polyamide having from 4 to 36 carbon numbers, more preferably having from 5 to 18 carbon numbers, most preferably having from 6 to 12 carbon numbers. The examples of these polyamides include PA 5T, PA 5T/5I, PA 5T/6T/5I/6I, PA 5T/4T/5I/4I, PA 4T/10T/5I/10I, PA 5T/510, PA 6T, PA 6T/6, PA6T/12, PA 6T/6I/6, PA 6T/66, PA4T/410, PA 6T/610, PA 6T/612, PA 6T/1012, PA 9T, PA 9T/612, PA 9T/1012, PA 10T, PA 10T/106, PA 10T/612, PA 10T/1012, PA 6T/6I/66, PA 10T/12, PA 10T/11, PA 11T, PA 12T, and PA 6T/6I/12, preferably is PA 6T/6, PA 66/6T, PA 6T/610 or PA 6T/612.

In one preferred embodiment, PA RT/RY comprises 60-100 mol% of (T), 0-40 mol% of (Y), R is 1,6-hexane diamine, 1,9-nonanediamine, 1,10-decanediamine, Y is dodecanedioic acid.

The semi-crystalline semi-aromatic polyamide in the present invention has a melting temperature (Tm) of 250°C - 350°C, preferably 280°C - 320°C, most preferably 305°C - 315°C. The melting temperature is defined as a temperature corresponding to an endothermic peak in a differential scanning calorimetry (DSC) curve, which is obtained by DSC according to ISO11357 at a heating rate of 10 K/min.

The semi-crystalline semi-aromatic polyamide in the present invention preferably has the viscosity number of 60-150 ml/g, more preferably 110-130 ml/g, which is measured in 0.5 wt% solution in 96 wt% sulfuric acid according to ISO307-2007 method.

In one preferred embodiment, the semi-crystalline semi-aromatic polyamide is selected from polyamide MXD6, polyamide 12T, polyamide 11T, polyamide 10T, polyamide 9T, polyamide 6T, polyamide 6T/66, polyamide 6T/DT, polyamide 66/6T/6I, polyamide 66/6T, polyamide 6T/6, polyamide 6T/6I, polyamide 5T, polyamide 5T/5I, polyamide 5T/6T/5I/6I, polyamide 5T/4T/5I/4I, polyamide 5T/510, and mixtures thereof.

In another preferred embodiment, the semi-crystalline semi-aromatic polyamide is at least one selected from the group consisting of PA 4T/410, PA 4T/4I, PA 4T/6I, PA 4T/10T/5I/10I, PA 4T/6T/DT, PA 4T/10T/DT, PA 4T/4I/6T/6I/DT/DI, PA 5T, PA 5T/5I, PA 5T/6T/5I/6I, PA 5T/4T/5I/4I, PA 5T/510, PA 6T, PA 6T/6, PA6T/12, PA 6T/6I/6, PA 6T/6I/66, PA 6T/66, PA 6T/610, PA 6T/612, PA 6T/1012, PA 6T/6I/12, PA 6T/8T, PA 6T/9T, PA 6T/10T, PA 6T/10I,PA 6T/12T, PA 9T, PA 9T/612, PA 9T/1012, PA 10T, PA 10T/106, PA 10T/612, PA 10T/1012, PA 10T/12, PA 10T/11, PA 11T, PA 12T, and mixtures thereof.

The semi-crystalline semi-aromatic polyamide can be produced using a conventionally known method such as a melt polymerization method or a solution polymerization method.

The semi-crystalline semi-aromatic polyamide (A) in the present invention is in an amount of from 69% to 89.9% by weight, preferably from 70% to 89% by weight, more preferably from 72% to 85% by weight, such as 72%, 75%, 76%, 78%, 79%, 80%, 83%, 85% by weight; based on the total percentage by weight of the insulation film. The suitable semi-crystalline semi-aromatic polyamide could be PA9T or its copolymer, PA10T or its copolymer, PA11T or its copolymer, PA12T or its copolymer, and mixtures thereof.

The polyamide disclosed herein should not be limited to the ones prepared from virgin crude oil monomers, and could be completely or at least partially biobased or derived from waste stream or recycling activities, i.e., the polyamide used in the present application can be based on renewable materials, secondary raw materials or recycled raw materials. For example, PA5T, PA6T, PA9T, PA10T, PA11T and PA12T used in the present application could be prepared or obtained or derived from monomers that obtained in a conventional re-monomerisation process.

Preferably, the flame retardant herein comprises a metal salt of dialkylphosphinate (B-1) comprising metal salts of phosphinic acid of formula (I), metal salts of diphosphinic salt of formula (II) or/and the mixture thereof; 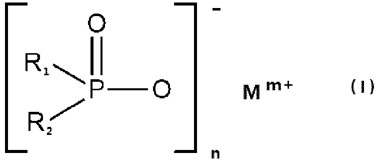 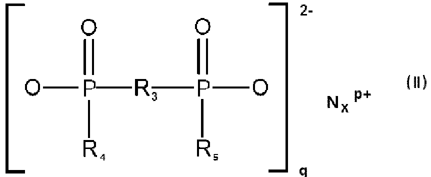 wherein R₁ and R₂ are identical or different and are linear or branched C₁-C₆-alkyl, preferable is linear or branched C₁-C₄ alkyl, more preferable is methyl, ethyl, n-propyl, isopropyl, n-butyl, tert-butyl, n-pentyl, and/or phenyl;
M or N is Mg, Ca, Al, Sb, Sn, Ge, Ti, Zn, Fe, Zr, Ce, Bi, Sr, Mn, Li, Na, K, a protonated nitrogen base or a mixture thereof, preferable is Mg, Ca, Al, Zn, or a mixture thereof; m is integer of 1 to 4; n is integer of 1 to 4;
R₃ is linear or branched C₁-C₁₀-alkylene, C₆-C₁₀-arylene, C₇-C₂₀-alkylarylene or C₇-C₂₀-arylalkylene, preferable is linear or branched C₁-C₄-alkylene or C₆-C₁₀-arylene, more preferable is methylene, ethylene, n-proylene, isopropylene, n-buytlene, tert-butylene, n-pentylene, n-octylene, n-dodecylene, phenylene, naphthylene, phenylmethylene, phenylethylene, phenylpropylene or phenylbutylene.
R₄ and R₅ are identical or different and are linear or branched C₁-C₆-alkyl, preferable is linear or branched C₁-C₄ alkyl, more preferable is methyl, ethyl or propyl; q is integer of 1 to 4; p is integer of 1 to 4; x is integer of 1 to 4.

Protonated nitrogen base are preferably the protonated bases of ammonia, melamine, triethanolamine, particlular is NH₄⁺.

The phosphinic acids for the production of the metal salt of phosphinic acid of formula (I) in the present invention are preferably dimethylphosphinic acid, ethylmethylphosphinic acid, diethylphosphinic acid, methyl-n-propylphosphinic acid.

The diphosphinic acid for the production of the salt of diphosphinic acid of formula (II) in the present invention are preferably methane-di(methylphosphinic acid), ethane-1,2-di(methylphosphinic acid), hexane-1,6-di(methylphosphinic acid), benzene-1,4-di(methylphosphinic acid), methylphenylphosphinic acid, diphenylphosphinic acid.

Examples of metal salts of phosphinic acid of formula (I) include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphoshinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate and zinc methyl-n-propylphosphinate. Among them, aluminum diethylphosphinate, zinc diethylphosphinate, aluminum dimethylphosphinate and zinc dimethylphosphinate are more preferable.

Examples of metal salt of diphosphinic acid of formula (II) include calcium methanedi(methylphosphinate), magnesium methanedi(methylphosphinate), aluminum methanedi(methylphosphinate), zinc methanedi(methylphosphinate), calcium benzene-1,4-(dimethylphosphinate), magnesium benzene-1,4-(dimethylphosphinate), aluminum benzene-1,4-(dimethylphosphinate) and zinc benzene-1,4-(dimethylphosphinate).

Flame retardant can further comprise flame retardant synergist (B-2). The suitable flame retardant synergist includes phosphorus synergist, nitrogen synergist, and phosphorus/nitrogen synergist.

The phosphorus synergist in the present invention can be metal salt of phosphorous acid, polyphosphonate, phosphazene, polyphosphonate, organophosphate, and the mixtures thereof. The metal salt of phosphorous acid comprises the structural unit of formula (III) or (IV): 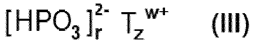 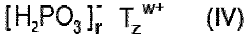 wherein T is Mg, Ca, Al, Sb, Sn, Ge, Ti, Zn, Fe, Zr, Ce, Bi, Sr, Mn, Li, Na, K, a protonated nitrogen base or a mixture thereof, preferable is Al and/or Zn; r is 1 to 4; w is 1 to 4; z is 1 to 7, preferably is 1 to 4.

Examples of melt salt of phosphorous acid are Al(H₂PO₃)₃, Al₂(HPO₃)₃, Zn(HPO₃), Al₂(HPO₃)₃ ·4H₂O and Al(OH)(H₂PO₃)₂·2H₂O, preferable is Al₂(HPO₃)₃.

Protonated nitrogen base are preferably the protonated bases of ammonia, melamine, triethanolamine, particularly is NH₄⁺.

The suitable nitrogen synergist can be melamine condensation products, such as melem, melam, melon, and the mixtures thereof.

The suitable phosphorus/nitrogen synergist can be the reaction products of melamine with polyphosphoric acid, condensation products of melamine with polyphosphoric acid, and the mixtures thereof, such as dimelamine pyrophosphate, melamine polyphosphate, melem polyphosphate, melam polyphosphate, melon polyphosphate, the mixtures thereof.

The metal salt of dialkylphosphinate (B-1) and flame retardant synergist (B-2) are preferably in a mass ratio of from 60:40 to 90:10, more preferably from 75:25 to 90:10, for example 85:15, 80:20.

The suitable flame retardant could be Exolit^{®} OP series from Clariant.

The flame retardant synergist can also be metal oxide, metal hydroxide, boehmite, hydrotalcite, hydrocalumite, metal borate such as zinc borate, metal hydroxystannate such as zinc hydroxystannate. Suitable metal oxide is magnesium oxide, calcium oxide, zinc oxide, manganese oxide, tin oxide, tin oxide hydrate, and the mixtures thereof. Suitable metal hydroxide is aluminum hydroxide, magnesium hydroxide, calcium hydroxide, zinc hydroxide, manganese hydroxide.

In one preferred embodiment, the flame retardant (B) is the mixture of metal salt of dialkylphosphinate (B-1) and metal salt of phosphorous acid comprising the structural unit of formula (III) or (IV).

In one preferred embodiment, the flame retardant (B) is the mixture of metal salt of dialkylphosphinate (B-1) and flame retardant synergist (B-2),
- metal salt of dialkylphosphinate (B-1) which is selected from the group consisting of aluminum diethylphosphinate, zinc diethylphosphinate, aluminum dimethylphosphinate and zinc dimethylphosphinate, preferably is aluminum diethylphosphinate, and
- flame retardant synergist is metal salt of phosphorous acid comprising the structural unit of formula (III) or (IV), which is selected from the group consisting of Al(H₂PO₃)₃, Al₂(HPO₃)₃, Zn(HPO₃), Al₂(HPO₃)₃ ·4H₂O and Al(OH)(H₂PO₃)₂·2H₂O, preferable is Al₂(HPO₃)₃,
wherein the metal salts of phosphinic acid (B-1) and flame retardant synergist (B-2) are in a mass ratio of from 75:25 to 90:10.

In one preferred embodiment, the flame retardant (B) is the mixture of metal salt of dialkylphosphinate (B-1) and flame retardant synergist (B-2),
- metal salt of dialkylphosphinate (B-1) which is at least one selected from the group consisting of aluminum diethylphosphinate, zinc diethylphosphinate, aluminum dimethylphosphinate and zinc dimethylphosphinate, preferably is aluminum diethylphosphinate, and
- flame retardant synergist (B-2) which is at least one selected from the group consisting of melamine polyphosphate, melem polyphosphate, melam polyphosphate,
wherein the metal salt of phosphinic acid (B-1) and flame retardant synergist (B-2) are in a mass ratio of from 75:25 to 90:10.

The flame retardant (B) in the present invention is in an amount of from 10% to 25% by weight, preferably is from 15% to 25% by weight, such as 15%, 20%, 25% by weight, based on the total percentage by weight of the insulation film.

The acid scavenger in the present invention comprises metal stannate, metal hydroxy stannate, metal salt of higher fatty acids.

The term "metal stannate" herein excludes partially or fully hydrated metal stannate. Examples of metal stannate are zinc stannate, magnesium stannate, calcium stannate, barium stannate, bismuth stannate, and the mixtures thereof, preferably is zinc stannate and bismuth stannate.

Examples of metal hydroxy stannate are zinc hydroxy stannate, bismuth hydroxy stannate, and the mixtures thereof.

Examples of metal salt of higher fatty acids are calcium stearate, zinc stearate, magnesium behenate, magnesium stearate, sodium ricinoleate and potassium palmitate, antimony pyrocatecholate and zinc pyrocatecholate, and the mixtures thereof, preferably is zinc stearate, calcium stearate, magnesium stearate.

The acid scavenger can also be zinc oxide, calcium lactate, hydrotalcite, dihydrotalcite, and the mixtures thereof.

In one preferred embodiment in the present invention, the acid scavenger is metal stannate. Preferably is anhydrous zinc stannate and/or anhydrous bismuth stannate.

The acid scavenger (C) in the present invention is in an amount of from 0.1% to 1% by weight, preferably is from 0.1% to 0.5% by weight, based on the total percentage by weight of the insulation film.

The further additives in the present invention can be selected from conventional additives for plastic, for example, lubricants, antioxidants, release agents, impact modifiers, thermal stabilizers, photostabilizers such as UV stabilizers, plasticizers, surfactants, nucleating agents, coupling agents, antimicrobial agents, antistatic agents, and any combinations thereof.

For the purpose of the present invention, the additives can be used in conventional amounts. For example, the insulation film can comprise at least one additive in an amount of 0.01 to 5% by weight, based on the total percentage by weight of the insulation film.

The insulation film can for example comprise an antioxidant. Suitable antioxidants are aromatic amine-based antioxidants, hindered phenol-based antioxidants and phosphite-based antioxidants, particularly hindered phenol-based antioxidants. Examples of hindered phenol-based antioxidants include, but are not limited to, α-[3-[3,5-bis(1,1-dimethylethyl)-4-hydroxyphenyl]-1-oxopropyl]-ω-[3-[3,5-bis(1,1-dimethylethyl)-4-hydroxyphenyl]-1-oxopropoxy]poly(oxy-1,2-ethanediyl), 2,4-bis[(octylthio)methyl]-o-cresol, octyl-3,5-di-tert-butyl-4-hydroxy-hydrocinnamate, 3,5-bis(1,1-dimethylethyl)-4-hydroxybenzenepropanoic acid C7-C9-branched alkyl ester, 2,4-bis[(dodecylthio)methyl]-o-cresol, 4,4'-butylidene bis-(3-methyl-6-tertbutylphenol), 3,5-bis(1,1-dimethylethyl)-4-hydroxybenzenepropanoic acid octadecyl ester, pentaerythritol tetrakis(3-(3,5-di-tert-butyl-4-hydroxyphenyl)propionate), triethylene glycol bis[3-(3-tert-butyl-5-methyl-4-hydrophenyl)propionate], 2,4-bis(n-octylthio)-6-(4-hydroxy-3,5-di-tert-butylanilino)-1,3,5-triazine, tris-(3,5-di-tert-butyl-4-hydroxybenzyl)isocyanurate, 2,2-thiodiethylene bis[3-(3,5-di-tert-butyl-4-hydroxyphenyl)propionate], N,N'-1,6-hexanediylbis[3,5-bis(1,1-dimethylethyl)-4-hydroxyl-benzenepropanamide.

The antioxidant, when present, can be in an amount of 0.01 to 1% by weight, or 0.1 to 0.5% by weight, based on the total percentage by weight of the insulation film.

The insulation film can for example comprise a thermal stabilizer. Suitable thermal stabilizers are organic phosphinate, inorganic hypophosphite, inorganic phosphonate, organophosphite and the mixtures thereof, inorganic phosphonate and organic phosphinate are preferably. Examples of the thermal stabilizer are sodium phosphonate, potassium phosphonate, sodium phenylphosphonate, potassium phenylphosphonate, lithium phenylphosphonate, sodium ethyl phosphonate, potassium ethylphosphonate, ammonium phosphonate, sodium hypophosphite, potassium hypophosphite, lithium hypophosphite, magnesium hypophosphite, calcium hypophosphite and ammonium hypophosphites sodium hypophosphite, potassium hypophosphite, lithium hypophosphite, magnesium hypophosphite, calcium hypophosphite, ammonium hypophosphites, and sodium benzene phosphinate.

Suitable thermal stabilizers are halogen-containing compound, preferable is metal halide, more preferably is KCI, KBr, KI and Cul, most preferably is the mixture of KI and Cul.

The insulation film can for example comprise a lubricant. Suitable lubricants are preferably esters or amides of saturated or unsaturated aliphatic carboxylic acids having from 10 to 40, preferably from 16 to 22 carbon atoms with saturated aliphatic alcohols or amines which comprise from 2 to 40, preferably from 2 to 6 carbon atoms. The carboxylic acids can be mono- or dibasic. Examples of the carboxylic acids are pelargonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms). The aliphatic alcohols can be mono- to tetrahydric. Examples of the aliphatic alcohols are n-butanol, n-octanol, stearyl alcohol, ethylene glycol, propylene glycol, neopentyl glycol, and pentaerythritol, preference being given to glycerol and pentaerythritol. The aliphatic amines can be mono- to trifunctional. Examples of the aliphatic amines are stearylamine, ethylenediamine, propylenediamine, hexamethylenediamine, and di(6-aminohexyl) amine, particular preference being given here to ethylenediamine and hexamethylenediamine.

Preferred esters or amides are N, N'-ethylenedi(stearamide), glycerol distearate, glycerol tristearate, glycerol monopalmitate, glycerol trilaurate, glycerol monobehenate, and pentaerythritol tetrastearate. N, N'-ethylenedi(stearamide) is particularly preferred as a lubricant in the insulation film according to the present invention.

It is also possible to use mixtures of various esters or amides, or esters with amides in combination, in any desired mixing ratio.

The other lubricants are preferably long-chain fatty acids (e.g., stearic acid or behenic acid), salts of these (e.g., Ca stearate or Zn stearate), or montan waxes (mixtures of straight-chain, saturated carboxylic acids having chain lengths of from 28 to 32 carbon atoms), Ca montanate or Na montanate, and also low-molecular-weight polyethylene waxes and low-molecular-weight polypropylene waxes.

The lubricant, when present, can be in an amount of 0.01 to 2% by weight, or 0.2 to 1% by weight, based on the total percentage by weight of the insulation film.

The insulation film can for example comprise an impact modifier. Suitable impact modifiers can include polyolefin-based, styrene-based, unsaturated carboxylic acid-based impact modifiers. Suitable impact modifiers can also be those modified by a functional block, such as epoxy functional block and/or acid anhydride block. The epoxy function block can be units derived from a glycidyl (meth)acrylate. The acid anhydride block can be units derived from maleic anhydride.

Suitable polyolefin-based impact modifiers can include polyolefins comprising repeating units derived from olefin having 2 to 10 carbon atoms. Examples of such olefins include ethylene, 1-butene, 1-propylene, 1-pentene, 1-octene and mixture of ethylene and 1-octene, preferably ethylene, 1-propylene and mixture of ethylene and 1-octene.

Suitable unsaturated carboxylic acid-based impact modifiers can include blocks derived from carboxylic acid and derivates thereof such as ester, imide and amide. Suitable carboxylic acid and derivates thereof are for example acrylic acid, acrylic acid, methacrylic acid, maleic acid, fumaric acid, glutaconic acid, itaconic acid, citraconic acid, (meth)acrylate, methyl (meth)acrylate, ethyl (meth)acrylate, propyl (meth)acrylate, butyl (methyl)acrylate and isobutyl (meth)acrylate.

The impact modifier can also be a bi- or ter-polymer or a core-shell structure polymer. Examples of such impact modifier include styrene/ethylene/butylene copolymer (SEBS), ethylene-methyl acrylate-glycidyl methacrylate terpolymer, ethylene/propylene/diene rubber (EPDM) and ethylene-octene copolymer.

The impact modifier, when present, can be in an amount of 0.01 to 5% by weight, or 1 to 5% by weight, based on the total percentage by weight of the insulation film.

The insulation film can for example comprise a plasticizer, including but not limited to dioctyl phthalate, dibenzyl phthalate, butyl benzyl phthalate, hydrocarbon oils, and N-(n-butyl) benzenesulfonamide.

The plasticizer, when present, can be in an amount of 0.01 to 5% by weight, or 1 to 5% by weight, based on the total percentage by weight of the insulation film.

The insulation film can for example comprise a nucleating agent that does not cause a decrease in physical properties of a molded product when used in a small amount, and that has a significant crystallization promoting effect is desired.

The nucleating agent herein can be selected from at least one of an inorganic nucleating agent and an organic nucleating agent with the particle size of less than 1 µm. Preferably, the inorganic nucleating agent is at least one of talcum powder, montmorillonite and calcium carbonate; the organic nucleating agent is at least one of sodium benzoate, sorbitol dibenzyl ester and sodium carboxylate.

The nucleating agent, when present, can be in an amount of 0.01 to 5% by weight, or 1 to 5% by weight, based on the total percentage by weight of the insulation film.

The insulation film in the present invention is a film or thin sheet, the thickness can be adjusted based on the application requirement, preferably is in a range of 50µm to 600µm, more preferably is in a range of 100µm to 400µm, most preferably is in a range of 150µm to 300µm.

The insulation film in the present invention shows excellent flame retardancy which can approach V-0 UL94 VTM for specimen with thickness of 0.20 mm, V-0 UL94 for specimen with thickness of 0.8mm.

The insulation film in the present invention can pass the GWFI (glow-wire flammability index) test according to DIN EN 60695-2-12 at 960 °C for the specimen with thickness of 0.75mm and 1.5mm.

The insulation film in the present invention can pass the GWIT (glow-wire-ignition-temperature) test according to DIN EN 60695-2-13 at 775 °C for the specimen with thickness of 0.75mm.

The insulation film in the present invention has a dielectrical strength of more than 40 KV/mm, preferably more than 45 KV/mm, measured under conditioned status at room temperature according to IEC 60243-1 in Midel 7131 ester liquid.

The insulation film in the present invention has a dielectrical strength of more than 70 KV/mm, preferably more than 72 KV/mm, measured under dried status at room temperature according to IEC 60243-1 in Midel 7131 ester liquid.

The insulation film in the present invention has a dielectrical strength of more than 40 KV/mm, preferably more than 45 KV/mm, measured under dried status at 150°C according to IEC 60243-1 in Midel 7131 ester liquid.

The insulation film in the present invention has a dielectrical strength drop at 120°C of no more than 40%, perferably 35%, compared to the dielectrical strength at room temperature measured under dried status according to IEC 60243-1 in Midel 7131 ester liquid.

The insulation film in the present invention has a dielectrical strength drop at 150°C of no more than 45%, perferably 37%, compared to the dielectrical strength at room temperature measured under dried status according to IEC 60243-1 in Midel 7131 ester liquid.

The surface of the insulation film in the present invention is even, smooth, uniform and without defects like fisheyes, burrs, cracks.

Accordingly, the present invention provides a coil bobbin comprising the insulation film in the present invention.

Furthermore, the present invention provides use of said insulation film, which can be used in the following fields: packages; electrical insulation materials for motors, transformers, cables, etc.; dielectric materials for capacitor applications and the like; magnetic tape materials such as magnetic tape cassettes, magnetic tapes for data storage for digital data storage, and video tapes; protective sheets for solar cell substrates, liquid crystal panels, display devices, and the like; an electronic substrate material such as an LED mounting substrate, a substrate for flexible printed wiring, a flexible flat cable, or the like; heat-resistant tapes such as coverlay films for flexible printed wiring, heat-resistant masking tapes, and industrial process tapes; a heat resistant bar code label; a heat-resistant reflector; an insulating tape; various release films; a heat-resistant base film; a photo film; a molding material; agricultural materials; a medical material; materials for civil engineering and construction; filtration membranes, and the like, membranes for domestic use, industrial materials.

Accordingly, the present invention provides a manufacturing method to produce the insulation film in the present invention, comprising (S1) granules prepared by a polyamide-based composition which has the same components of the insulation film are heated and melt-extruded through a slit die to form an extruded layer, and cooling the extruded layer to obtain an insulation film or an unstretched film.

In one preferred embodiment of the present invention, the manufacturing method comprises (S2) stretching the unstretched film into an insulation film.

In one preferred embodiment of the present invention, the manufacturing method comprises (S3) heat fixing and cooling to obtain the insulation film.

In one more preferred embodiment of the present invention, the manufacturing method comprising:
(S1) granules prepared by a polyamide-based composition which has the same components of the insulation film are heated and melt-extruded through a slit die to form an extruded layer, and cooling the extruded layer to obtain an insulation film or an unstretched film, and
(S2) stretching the unstretched film into an insulation film.

In one more preferred embodiment of the present invention, the manufacturing method comprising:
(S1) granules prepared by a polyamide-based composition which has the same components of the insulation film are heated and melt-extruded through a slit die to form an extruded layer, and cooling the extruded layer to obtain an insulation film or an unstretched film,
(S2) stretching the unstretched film, and
(S3) heat fixing and cooling to obtain the insulation film.

The granules are prepared according to conventional methods. For example, the individual components of the insulation film according to the present invention can be mixed and then molded, for example via injection and/or extrusion in conventional mixing apparatus, such as screw extruders, Brabender mixers or Banbury mixers to form the articles. The mixing or extruding temperatures used herein are generally from 280°C to 330°C.

With respect to step (S1), the granules are preferably melted at a temperature of from 280°C to 340°C and then screw extruded into a layer or film with a thickness of 50-600 µm. The rotating speed of the screw is not limited in the present invention, for example from 30 to 80 rpm. Chill rolls: 100-180°C. The cooling can be realized via a conventional method, for example via chill rolls. The chill roll temperature is preferably from 110°C to 170°C.

The stretch of step (S2) can be conducted via conventional methods.

In one preferred embodiment of the present invention, during the process of step (S2), the unstretched film is stretched by 0 to 3 times in the longitudinal direction, more preferably 0.1 to 1.5 times in the longitudinal direction.

In one preferred embodiment of the present invention, the unstretched film is stretched at a temperature of from 125°C to 180°C.

In one preferred embodiment of the present invention, after obtaining the insulation film, it is preferably pull-off from the rolls in a speed of from 1 m/min to 15 m/min, more preferably 2 m/min to 8 m/min.

### EXAMPLES

Aspects of the present invention are more fully illustrated by the following examples, which are set forth to illustrate certain aspects of the present invention.

Following materials and test methods were used in the Examples.

### Materials:

**Table 1 Materials used in example**

| Acronym/Name_Description | |
|---|---|
| A: PA9T | Genestar^{®} GC72018 from Kuraray, having a viscosity number of 110-130 ml/g, determined as 0.5 wt% solution in 96 wt% sulfuric acid at 25°C according to ISO 307 |
| B: Flame retardant | Exolit ^{®} OP1400 from Clariant, a mixture of diethylphosphinate and aluminum salt of phosphorous acid in a mass ratio of about 4:1 |
| C: Zinc stannate | CAS: 12036-37-2 |
| D1: EBS | Ethylene-bis-stearamide, CAS: 110-30-5 |
| D2: Irganox 1098 | Antioxidant from BASF SE |
| D3: Cul and KI | Stabilizer mixture of Cul and KI, POLYAD PB 201 IODIDE STAB from Byk-Chemie GmbH |
| D4: Talc | CAS: 14807-96-6 |
| D5: Carbon black | CAS: 1333-86-4 |

### General procedure for preparing the test specimens

### Preparation of the granules:

The natural-colored polyamide 9T was dried at 120°C to a moisture content of less than 0.1% by weight, all other components (C) to (D) were pre-mixed in a tumble mixer for 10 minutes. In the next step, the dried polyamide 9T together with the dried blended components were melt-extruded using a twin-screw extruder having a diameter of 26 mm and a L/D ratio of 44. The flame retardant (B) was added into the polymer melt via a side feeder. The extruder was operated with a rotating speed of 350 rpm, a throughput of 30 kg/h and with a cylinder temperature of 280°C to 330°C employing a flat temperature profile. The obtained strands were cooled in a water bath and granulated.

### Preparation of the insulation film:

The resulting granules were heated and melt-extruded through a slit die to produce a film with a thickness of 240µm via a single screw extruder (rotating speed: 50 rpm, flat temperature profile: 340°C, chill rolls: 140°C, pull-off speed: 4.8 m/min).

### Measurements:

The test specimens for the tests listed in Table 2 were injection-molded in an Arburg 420C injection molding machine at a melt temperature of about 340°C and at a mold temperature of about 80°C.
1.Tensile modulus, tensile strength and elongation at break for specimens having thickness of 4 mm were measured according to ISO 527-2-1993. Test specimens of type 1 described in ISO 527-2-1993 were used. Charpy notched impact strength and Charpy unnotched impact strength was measured according to ISO 179-2/1 eA. All the test specimens were conditioned at 23°C and 50% relative humidity for 24 h. The tests were conducted under the same atmosphere as conditioning.
2. Melt volume-flow rate (MVR) was tested according to ISO1133 under 325°C and 5 kg loading.
3.Viscosity number was determined as 0.5 wt% solution in 96 wt% sulfuric acid at 25°C according to ISO 307.
4.The flame retardancy was determined by the UL 94 V method (Underwriters Laboratories Inc. Standard of Safety, "Test for Flammability of Plastic Materials for Parts in Devices and Appliances", p. 14 to p. 18 Northbrook 1998).
5. Glow-wire flammability index (GWFI) was tested in accordance with DIN EN 60695-2-12 on plaques. The GWFI test is a general suitability test for plastics in contact with parts that carry an electrical potential. The temperature determined is the highest at which one of the following conditions is met in three successive tests: (a) no ignition of the specimen or (b) afterflame time or afterglow time 30 s after end of exposure to the glow wire, and no ignition of the underlay.
6. Glow-wire-ignition-temperature (GWIT) was tested in accordance with DIN EN 60695-2-13 on plaques. In the GWIT test, the maximum temperature is determined on 3 test specimens (e.g., on plates with a geometry of 60 x 60 x 1.5 mm) using a glowing wire at temperatures between 650 and 960°C, and the exposure time of the glow wire does not lead to ignition. The specified glow wire ignition temperature is 25K above the maximum temperature determined. The criterion for ignition is a flame with a burning time of >5 seconds.
7. Volume resistivity was measured according to IEC 62631-3-1.8. Dielectrical strength was measured according to IEC 60243-1 in Midel 7131 ester liquid. Midel 7131 is a biodegradable synthetic ester dielectric liquid designed to provide an alternative to mineral oil, silicone liquid and dry-type transformers. Ball/ball electrodes with 20mm diameter. Voltage Slew Rate = 2.0kV/s.

**Table 2**

| Components/Test-method | Example 1 |
|---|---|
| A | 78.7% |
| B | 19.85% |
| C | 0.15% |
| D/1 | 0.6% |
| D/2 | 0.35% |
| D/3 | 0.12% |
| D/4 | 0.03% |
| D/5 | 0.2% |
| | |
| VN /[ml/g] | 122 |
| MVR 325/5 /[ccm/10 min] | 45 |
| Tensile modulus /[MPa] | 3200 |
| Tensile strength /[MPa] | 62 |
| Elongation at break /[%] | 4.3 |
| Charpy unnotched /kJ/m² | 44 |
| Charpy unnotched -30°C/kJ/m² | 52 |
| Charpy notched /kJ/m² | 3.0 |
| UL94 VTM (0.2 mm) | V-0 |
| UL94 (0.8 mm) | V-0 |
| GWFI 960°C / 0.75 mm | passed |
| GWIT 775°C / 0.75 mm | passed |
| GWFI 960°C / 1.5 mm | passed |

**Table 3 Performance of film**

| Properties | Unit/Item | **Comp.1** | **Ex.1** |
|---|---|---|---|
| | | T410 film | N4U41 film |
| Thickness | um | 250 (as typical thickness) | 240 |
| Density | g/cm³ | 0.96 | 1.12 |
| Dielectrical strength | KV/mm | 33.5 | 47*/73^{#} |
| Volume resistivity | Ohm*m | E+16 | >E+15 |
| FR | UL94 | V-0 (0.25mm) | VTM-0 (0.2mm) |

| | | | |
|---|---|---|---|
| "Comp.": Comparative; "Ex.": Example; "*" measured under conditioned status at room temperature (i.e., 23°C); "^{#}" measured under dried status (i.e., the dried status is achieved by keeping the samples under 100 °C, vacuum circumstance for 24 hours) at room temperature (i.e., 23°C). T410 film presented as **Comp.1** in the above Table 3 is Nomex^{®} 410 purchased from DuPont. | | | |

It can be seen from the results in Table 3 that the insulation film of **Ex.1** (i.e., N4U41 film) prepared by the polyamide-based composition according to the present invention shows prominent increased dielectrical strength with relatively lower thickness and excellent flame retardancy, compared with **Comp.1** T410 film. Considering the cost of **Comp.1** T410 film is generally much higher than that of **Ex.1** N4U41 film, the present invention provides an effective way to obtain insulation films with excellent dielectrical strength, high volume resistivity, and outstanding flame retardancy performance.

**Table 4 Dielectrical strength performance of PA9T insulation film of Example 1**

| ED dry - 24h 100°C Vacuum | Median |
|---|---|
| | Dielectrical strength ([kV/mm]) |
| T | Ultramid Adv. N4U41 LS BK23326 |
| 23°C | 73^{#} |
| 60°C | 59^{#} |
| 80°C | 55^{#} |
| 100°C | 53^{#} |
| 120°C | 48^{#} |
| 150°C | 46^{#} |

| | |
|---|---|
| "^{#}" measured at dried status (i.e., the dried status is achieved by keeping the samples under 100 °C, vacuum circumstance for 24 hours). | |

Surprisingly, it can be seen from the results in Table 4 that the insulation film prepared by the polyamide-based composition according to the present invention even shows a relatively high dielectrical strength (i.e., 46 kV/mm) at a high temperature of 150 °C, and the dielectrical strength drop at 150°C is only about 37% compared to the dielectrical strength at room temperature (i.e., 23°C) measured under dried status according to IEC 60243-1 in Midel 7131 ester liquid. Besides this, the dielectrical strength of the insulation film at 120°C can stil remain above 45 (i.e., 48) by a drop of about 34% compared to the dielectrical strength at room temperature (i.e., 23°C) measured under dried status. Therefore, the insulation film provided by the present invention exhibits relatively low reduction of dielectrical strength in response to a rise in temperature, thus showing excellent dielectrical strength stability when subject to a significantly elevated temperature.

**Table 5 Volume resistivity performance of PA9T insulation film of Example 1**

| Ultramid Adv. N4U41 LS BK 23326 | Volume resistivity [Ohm*cm] |
|---|---|
| 23°C | 1.8E+16 |
| 40°C | 1.0E+16 |
| 60°C | 2.7E+15 |
| 80°C | 4.8E+14 |
| 100°C | 4.8E+13 |
| 120°C | 7.8E+11 |
| 150°C | 3.1E+09 |

Also surprisingly, it can be seen from the results in Table 5 that the insulation film prepared by the polyamide-based composition according to the present invention shows high volume resistivity at room temperature. Even at a high temperature of 150 °C, the volume resistivity can still remain at 3.1E+09 Ohm*cm, proving that the insulation film still possesses improved electrical insulation property at a high temperature.

**Table 6**

| Components | Example 2 | Example 3 |
|---|---|---|
| A | 69% | 72% |
| B | 25% | 23% |
| C | 1.0% | 0.4% |
| D/1 | 1.2% | 2.4% |
| D/2 | 0.8% | 0.2% |
| D/3 | 0.3% | 0.8% |
| D/4 | 1.7% | 1.2% |
| D/5 | 1.0% | 0 |

Insulation films produced by the above polyamide-based composition examples provided in Table 6 show excellent flame retardant which can approach V-0 UL94 VTM for specimen with thickness of 0.2mm, V-0 UL94 for specimen with thickness of 0.8mm, and V-2 UL94 for specimen with thickness of 0.4mm, and also can pass the GWFI (glow-wire flammability index) test according to DIN EN 60695-2-12 at 960 °C for the specimen with thickness of 0.75mm and 1.5mm.

For the insulation property, the insulation films produced from Example 2-3 possess outstanding dielectrical strength of more than 40 KV/mm at room temperature, and also exhibit excellent dielectrical strength stability with a dielectrical strength drop at 150°C of no more than 45% compared to the dielectrical strength at room temperature measured under dried status according to IEC 60243-1 in Midel 7131 ester liquid.

Furthermore, the mechanical performance of the above insulation films prepared by the polyamide-based composition according to the present invention can meet the requirements for application in various technical fields, particularly in Electrical & Electronic systems, new energy automobile, electrical insulation materials for motors (of which a coil bobbin comprising the insulation film), packages, and heat-resistant materials.

## Claims

1. An insulation film prepared by a polyamide-based composition comprising:
A) from 69 to 89.9% by weight of a polyamide,
B) from 10 to 25% by weight of a flame retardant,
C) from 0.1 to 1.0% by weight of an acid scavenger,
D) from 0 to 5% by weight of further additives,
wherein the total percentage by weight of components A) to D) is 100%.

2. The insulation film according to claim 1, wherein the polyamide comprises at least one semi-crystalline semi-aromatic polyamide comprising dicarboxylic acid units, diamine units, and optionally units derived from other monomers such as amino acids and/or lactam units, and the dicarboxylic acid units or diamine units have aromatic groups.

3. The insulation film according to claim 2, wherein the semi-crystalline semi-aromatic polyamide comprises aromatic dicarboxylic acid units and aliphatic diamine units, or aliphatic and/or cycloaliphatic dicarboxylic acid units and aromatic diamine units.

4. The insulation film according to any of claims 1 to 3, wherein the semi-crystalline semi-aromatic polyamide is at least one selected from the group consisting of PA 4T/410, PA 4T/4I, PA 4T/6I, PA 4T/10T/5I/10I, PA 4T/6T/DT, PA 4T/10T/DT, PA 4T/4I/6T/6I/DT/DI, PA 5T, PA 5T/5I, PA 5T/6T/5I/6I, PA 5T/4T/5I/4I, PA 5T/510, PA 6T, PA 6T/6, PA6T/12, PA 6T/6I/6, PA 6T/6I/66, PA 6T/66, PA 6T/610, PA 6T/612, PA 6T/1012, PA 6T/6I/12, PA 6T/8T, PA 6T/9T, PA 6T/10T, PA 6T/10I,PA 6T/12T, PA 9T, PA 9T/612, PA 9T/1012, PA 10T, PA 10T/106, PA 10T/612, PA 10T/1012, PA 10T/12, PA 10T/11, PA 11T, PA 12T, or any combinations thereof defined as set fort in the description.

5. The insulation film according to any of claims 1 to 4, wherein the flame retardant comprises a metal salt of dialkylphosphinate (B-1) comprising metal salts of phosphinic acid of formula (I), metal salts of diphosphinic salt of formula (II), or the mixture thereof; 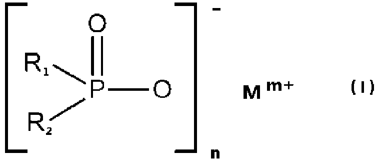 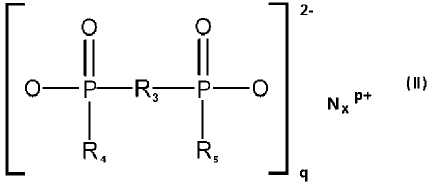
wherein R₁ and R₂ are identical or different and are linear or branched C₁-C₆-alkyl, preferable is linear or branched C₁-C₄ alkyl, more preferable is methyl, ethyl, n-propyl, iso-propyl, n-butyl, tert-butyl, n-pentyl, and/or phenyl;
wherein M or N is Mg, Ca, Al, Sb, Sn, Ge, Ti, Zn, Fe, Zr, Ce, Bi, Sr, Mn, Li, Na, K, a protonated nitrogen base or a mixture thereof, preferable is Mg, Ca, Al, Zn, or a mixture thereof; m is integer of 1 to 4; n is integer of 1 to 4;
wherein R₃ is linear or branched C₁-C₁₀-alkylene, C₆-C₁₀-arylene, C₇-C₂₀-alkylarylene or C₇-C₂₀-arylalkylene, preferable is linear or branched C₁-C₄-alkylene or C₆-C₁₀-arylene, more preferable is methylene, ethylene, n-proylene, isopropylene, n-buytlene, tert-butylene, n-pentylene, n-octylene, n-dodecylene, phenylene, naphthylene, phenylmethylene, phenylethylene, phenylpropylene or phenylbutylene;
wherein R₄ and R₅ are identical or different and are linear or branched C₁-C₆-alkyl, preferable is linear or branched C₁-C₄ alkyl, more preferable is methyl, ethyl or propyl; q is integer of 1 to 4; p is integer of 1 to 4; x is integer of 1 to 4.

6. The insulation film according to claim 5, wherein the flame retardant agent further comprises flame retardant synergist (B-2) which is at least one selected from the group consisting of phosphorus synergist, nitrogen synergist, and/or phosphorus/nitrogen synergist.

7. The insulation film according to any of claims 1 to 6, wherein one or all two of the following conditions (i) and/or (ii) apply:
(i) the acid scavenger comprises at least one selected from the group consisting of metal stannate, metal hydroxy stannate, metal salt of higher fatty acids, or any combinations thereof; and/or
(ii) the further additives can be at least one selected from the group consisting of lubricant, antioxidant, release agent, impact modifier, thermal stabilizer, photostabilizer, plasticizer, surfactant, nucleating agent, coupling agent, antimicrobial agent, antistatic agent, and any combinations thereof.

8. The insulation film according to any of claims 1 to 7, wherein the film has a thickness in a range of 50µm to 600µm, more preferably in a range of 100µm to 400µm, most preferably in a range of 150µm to 300µm.

9. The insulation film according to any of claims 1 to 8, wherein one of the following conditions (i) or (ii) applies:
(i) the film has a dielectrical strength of more than 40 KV/mm measured under conditioned status at room temperature according to IEC 60243-1 in Midel 7131 ester liquid; or
(ii) the film has a dielectrical strength of more than 70 KV/mm measured under dried status at room temperature according to IEC 60243-1 in Midel 7131 ester liquid.

10. The insulation film according to any of claims 1 to 8, wherein the film has a dielectrical strength of more than 40 KV/mm measured under dried status at 150°C according to IEC 60243-1 in Midel 7131 ester liquid.

11. The insulation film according to any of claims 1 to 10, wherein the film has adielectrical strength drop at 150°C of no more than 45% compared to the dielectrical strength at room temperature measured under dried status according to IEC 60243-1 in Midel 7131 ester liquid.

12. Use of a polyamide-based composition in the preparation of an insulation film, wherein the insulation film comprises:
A) from 69 to 89.9% by weight of a polyamide,
B) from 10 to 25% by weight of a flame retardant,
C) from 0.1 to 1.0% by weight of an acid scavenger,
D) from 0 to 5% by weight of further additives,
wherein the total percentage by weight of components A) to D) is 100%.

13. The use according to claim 12, wherein extruding granules prepared by a polyamide-based composition which have the same components of the insulation film, and cooling to obtain an insulation film or an unstretched film.

14. The use according to any of claims 12 and 13, wherein one, two or all three of the following conditions (i), (ii) and/or (iii) apply:
(i) stretching the unstretched film into an insulation film;
(ii) stretching the unstretched film, and heat fixing and cooling to obtain an insulation film; and/or
(iii) the granules are preferably melted at a temperature of from 280 to 340°C and then screw extruded into a film with a thickness of 50-600µm.

15. Use of the insulation film according to any of claims 1 to 11, for producing components in electrical and electronic systems, new energy automobile, and electrical insulation parts for motors.

## Patentansprüche

1. Isolierfolie, hergestellt aus einer Zusammensetzung auf Polyamidbasis, umfassend:
A) 69 bis 89,9 Gew.-% eines Polyamids,
B) 10 bis 25 Gew.-% eines Flammschutzmittels,
C) 0,1 bis 1,0 Gew.-% eines Säurefängers,
D) 0 bis 5 Gew.-% weiterer Zusatzstoffe,
wobei der gesamte Gewichtsprozentsatz der Komponenten A) bis D) 100 % beträgt.

2. Isolierfolie nach Anspruch 1, wobei das Polyamid mindestens ein teilkristallines, teilaromatisches Polyamid umfasst, das Dicarbonsäureeinheiten, Diamineinheiten und gegebenenfalls von anderen Monomeren abgeleitete Einheiten wie Aminosäuren und/oder Lactameinheiten umfasst, und die Dicarbonsäureeinheiten oder Diamineinheiten aromatische Gruppen aufweisen.

3. Isolierfolie nach Anspruch 2, wobei das teilkristalline, teilaromatische Polyamid aromatische Dicarbonsäureeinheiten und aliphatische Diamineinheiten oder aliphatische und/oder cycloaliphatische Dicarbonsäureeinheiten und aromatische Diamineinheiten umfasst.

4. Isolierfolie nach einem der Ansprüche 1 bis 3, wobei das teilkristalline, teilaromatische Polyamid mindestens eines ausgewählt aus der Gruppe bestehend aus PA 4T/410, PA 4T/4I, PA 4T/6I, PA 4T/10T/5I/10I, PA 4T/6T/DT, PA 4T/10T/DT, PA 4T/41/6T/61/DT/DI, PA 5T, PA 5T/5I, PA 5T/6T/5I/6I, PA 5T/4T/5I/4I, PA 5T/510, PA 6T, PA 6T/6, PA6T/12, PA 6T/6I/6, PA 6T/61/66, PA 6T/66, PA 6T/610, PA 6T/612, PA 6T/1012, PA 6T/6I/12, PA 6T/8T, PA 6T/9T, PA 6T/10T, PA 6T/10I, PA 6T/12T, PA 9T, PA 9T/612, PA 9T/1012, PA 10T, PA 10T/106, PA 10T/612, PA 10T/1012, PA 10T/12, PA 10T/11, PA 11T, PA 12T oder beliebigen Kombinationen davon, wie in der Beschreibung dargelegt, ist.

5. Isolierfolie nach einem der Ansprüche 1 bis 4, wobei das Flammschutzmittel ein Metallsalz eines Dialkylphosphinats (B-1) umfasst, das Metallsalze der Phosphinsäure der Formel (I), Metallsalze des Diphosphinatsalzes der Formel (II) oder deren Gemisch umfasst; 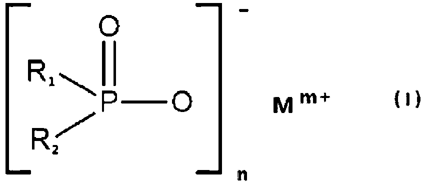 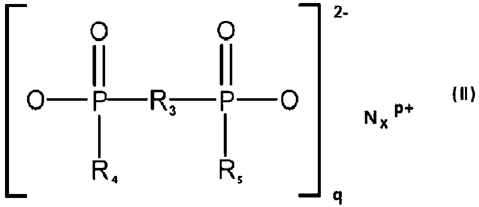
wobei R₁ und R₂ gleich oder verschieden sind und lineares oder verzweigtes C₁-C₆-Alkyl sind, vorzugsweise lineares oder verzweigtes C₁-C₄-Alkyl, besonders bevorzugt Methyl, Ethyl, n-Propyl, iso-Propyl, n-Butyl, tert-Butyl, n-Pentyl und/oder Phenyl;
wobei M oder N Mg, Ca, Al, Sb, Sn, Ge, Ti, Zn, Fe, Zr, Ce, Bi, Sr, Mn, Li, Na, K, eine protonierte Stickstoffbase oder ein Gemisch davon ist, vorzugsweise Mg, Ca, Al, Zn oder ein Gemisch davon; m ist eine ganze Zahl von 1 bis 4; n ist eine ganze Zahl von 1 bis 4;
wobei R₃ lineares oder verzweigtes C₁-C₁₀-Alkylen, C₆-C₁₀-Arylen, C₇-C₂₀-Alkylarylen oder C₇-C₂₀-Arylalkylen ist, vorzugsweise lineares oder verzweigtes C₁-C₄-Alkylen oder C₆-C₁₀-Arylen, besonders bevorzugt Methylen, Ethylen, n-Propylen, Isopropylen, n-Butylen, tert-Butylen, n-Pentylen, n-Octylen, n-Dodecylen, Phenylen, Naphthylen, Phenylmethylen, Phenylethylen, Phenylpropylen oder Phenylbutylen;
wobei R₄ und R₅ gleich oder verschieden sind und lineares oder verzweigtes C₁-C₆-Alkyl sind, vorzugsweise lineares oder verzweigtes C₁-C₄-Alkyl, besonders bevorzugt Methyl, Ethyl oder Propyl; q ist eine ganze Zahl von 1 bis 4; p ist eine ganze Zahl von 1 bis 4; x ist eine ganze Zahl von 1 bis 4.

6. Isolierfolie nach Anspruch 5, wobei das Flammschutzmittel ferner einen Flammschutzsynergisten (B-2) umfasst, der mindestens einer ausgewählt aus der Gruppe bestehend aus Phosphorsynergisten, Stickstoffsynergisten und/oder Phosphor/StickstoffSynergisten ist.

7. Isolierfolie nach einem der Ansprüche 1 bis 6, wobei eine oder beide der folgenden Bedingungen (i) und/oder (ii) zutreffen:
(i) der Säurefänger umfasst mindestens eines ausgewählt aus der Gruppe bestehend aus Metallstannat, Metallhydroxystannat, Metallsalz höherer Fettsäuren oder beliebigen Kombinationen davon; und/oder
(ii) die weiteren Zusatzstoffe können mindestens eines ausgewählt aus der Gruppe bestehend aus Gleitmittel, Antioxidationsmittel, Trennmittel, Schlagzähmodifikator, Wärmestabilisator, Lichtstabilisator, Weichmacher, Tensid, Keimbildner, Haftvermittler, antimikrobiellem Mittel, Antistatikum und beliebigen Kombinationen davon sein.

8. Isolierfolie nach einem der Ansprüche 1 bis 7, wobei die Folie eine Dicke im Bereich von 50 µm bis 600 µm, bevorzugter im Bereich von 100 µm bis 400 µm, am bevorzugtesten im Bereich von 150 µm bis 300 µm aufweist.

9. Isolierfolie nach einem der Ansprüche 1 bis 8, wobei eine der folgenden Bedingungen (i) oder (ii) zutrifft:
(i) die Folie weist eine Durchschlagsfestigkeit von mehr als 40 KV/mm auf, gemessen im konditionierten Zustand bei Raumtemperatur gemäß IEC 60243-1 in Midel 7131 Esterflüssigkeit; oder
(ii) die Folie weist eine Durchschlagsfestigkeit von mehr als 70 KV/mm auf, gemessen im getrockneten Zustand bei Raumtemperatur gemäß IEC 60243-1 in Midel 7131 Esterflüssigkeit.

10. Isolierfolie nach einem der Ansprüche 1 bis 8, wobei die Folie eine Durchschlagsfestigkeit von mehr als 40 KV/mm aufweist, gemessen im getrockneten Zustand bei 150 °C gemäß IEC 60243-1 in Midel 7131 Esterflüssigkeit.

11. Isolierfolie nach einem der Ansprüche 1 bis 10, wobei die Folie einen Abfall der Durchschlagsfestigkeit bei 150 °C von nicht mehr als 45 % im Vergleich zur Durchschlagsfestigkeit bei Raumtemperatur aufweist, gemessen im getrockneten Zustand gemäß IEC 60243-1 in Midel 7131 Esterflüssigkeit.

12. Verwendung einer Zusammensetzung auf Polyamidbasis zur Herstellung einer Isolierfolie, wobei die Isolierfolie umfasst:
A) 69 bis 89,9 Gew.-% eines Polyamids,
B) 10 bis 25 Gew.-% eines Flammschutzmittels,
C) 0,1 bis 1,0 Gew.-% eines Säurefängers,
D) 0 bis 5 Gew.-% weiterer Zusatzstoffe,
wobei der gesamte Gewichtsprozentsatz der Komponenten A) bis D) 100 % beträgt.

13. Verwendung nach Anspruch 12, wobei Granulate, die aus einer Zusammensetzung auf Polyamidbasis hergestellt wurden und dieselben Komponenten wie die Isolierfolie aufweisen, extrudiert und abgekühlt werden, um eine Isolierfolie oder eine ungestreckte Folie zu erhalten.

14. Verwendung nach einem der Ansprüche 12 und 13, wobei eine, zwei oder alle drei der folgenden Bedingungen (i), (ii) und/oder (iii) zutreffen:
(i) Strecken der ungestreckten Folie zu einer Isolierfolie;
(ii) Strecken der ungestreckten Folie sowie Wärmefixieren und Abkühlen zur Erhaltung einer Isolierfolie; und/oder
(iii) die Granulate werden vorzugsweise bei einer Temperatur von 280 bis 340 °C aufgeschmolzen und anschließend zu einer Folie mit einer Dicke von 50-600 µm schneckenextrudiert.

15. Verwendung der Isolierfolie nach einem der Ansprüche 1 bis 11 zur Herstellung von Bauteilen in elektrischen und elektronischen Systemen, Fahrzeugen mit neuer Energie sowie elektrischen Isolierteilen für Motoren.

## Revendications

1. Film d'isolation préparé à partir d'une composition à base de polyamide comprenant :
A) de 69 à 89,9 % en poids d'un polyamide,
B) de 10 à 25 % en poids d'un agent ignifuge,
C) de 0,1 à 1,0 % en poids d'un neutralisant d'acide,
D) de 0 à 5 % en poids d'additifs supplémentaires,
où le pourcentage total en poids des composants A) à D) est de 100 %.

2. Film d'isolation selon la revendication 1, dans lequel le polyamide comprend au moins un polyamide semi-aromatique semi-cristallin comprenant des unités d'acide dicarboxylique, des unités de diamine, et optionnellement des unités dérivées d'autres monomères tels que des acides aminés et/ou des unités lactame, et les unités d'acide dicarboxylique ou les unités de diamine comportent des groupes aromatiques.

3. Film d'isolation selon la revendication 2, dans lequel le polyamide semi-aromatique semi-cristallin comprend des unités d'acide dicarboxylique aromatique et des unités de diamine aliphatique, ou des unités d'acide dicarboxylique aliphatique et/ou cycloaliphatique et des unités de diamine aromatique.

4. Film d'isolation selon l'une quelconque des revendications 1 à 3, dans lequel le polyamide semi-aromatique semi-cristallin est au moins un sélectionné dans le groupe constitué de PA 4T/410, PA 4T/41, PA 4T/61, PA 4T/10T/5I/10I, PA 4T/6T/DT, PA 4T/10T/DT, PA 4T/4I/6T/6I/DT/DI, PA 5T, PA 5T/5I, PA 5T/6T/5I/6I, PA 5T/4T/5I/4I, PA 5T/510, PA 6T, PA 6T/6, PA6T/12, PA 6T/61/6, PA 6T/61/66, PA 6T/66, PA 6T/610, PA 6T/612, PA 6T/1012, PA 6T/61/12, PA 6T/8T, PA 6T/9T, PA 6T/10T, PA 6T/10I, PA 6T/12T, PA9T, PA 9T/612, PA 9T/1012, PA 10T, PA 10T/106, PA 10T/612, PA 10T/1012, PA 10T/12, PA 10T/11, PA 11T, PA 12T, ou toute combinaison de ceux-ci telle que définie dans la description.

5. Film d'isolation selon l'une quelconque des revendications 1 à 4, dans lequel l'agent ignifuge comprend un sel métallique de dialkylphosphinate (B-1) comprenant des sels métalliques d'acide phosphinique de formule (I), des sels métalliques de sel de diphosphinique de formule (II), ou leur mélange ; 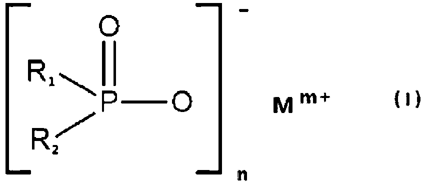 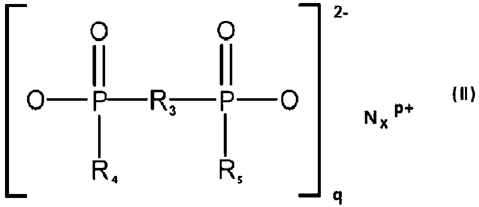
où R₁ et R₂ sont identiques ou différents et sont un alkyle C₁-C₆ linéaire ou ramifié, de préférence un alkyle C₁-C₄ linéaire ou ramifié, plus préférablement méthyle, éthyle, n-propyle, iso-propyle, n-butyle, tert-butyle, n-pentyle et/ou phényle ;
où M ou N est Mg, Ca, Al, Sb, Sn, Ge, Ti, Zn, Fe, Zr, Ce, Bi, Sr, Mn, Li, Na, K, une base azotée protonée ou un mélange de ceux-ci, de préférence Mg, Ca, Al, Zn, ou un mélange de ceux-ci ; m est un entier de 1 à 4 ; n est un entier de 1 à 4 ;
où R₃ est un alkylène C₁-C₁₀ linéaire ou ramifié, un arylène C₆-C₁₀, un alkylarylène C₇-C₂₀ ou un arylalkylène C₇-C₂₀, de préférence un alkylène C₁-C₄ linéaire ou ramifié ou un arylène C₆-C₁₀, plus préférablement méthylène, éthylène, n-propylène, isopropylène, n-butylène, tert-butylène, n-pentylène, n-octylène, n-dodécylène, phénylène, naphtylène, phénylméthylène, phényléthylène, phénylpropylène ou phénylbutylène ;
où R₄ et R₅ sont identiques ou différents et sont un alkyle C₁-C₆ linéaire ou ramifié, de préférence un alkyle C₁-C₄ linéaire ou ramifié, plus préférablement méthyle, éthyle ou propyle ; q est un entier de 1 à 4 ; p est un entier de 1 à 4 ; x est un entier de 1 à 4.

6. Film d'isolation selon la revendication 5, dans lequel l'agent ignifuge comprend en outre un synergiste ignifuge (B-2) qui est au moins un sélectionné dans le groupe constitué d'un synergiste phosphoré, d'un synergiste azoté et/ou d'un synergiste phosphore/azote.

7. Film d'isolation selon l'une quelconque des revendications 1 à 6, dans lequel l'une ou les deux conditions suivantes (i) et/ou (ii) s'appliquent :
(i) le neutralisant d'acide comprend au moins un sélectionné dans le groupe constitué de stannate métallique, de stannate d'hydroxy métallique, de sel métallique d'acides gras supérieurs, ou toute combinaison de ceux-ci ; et/ou
(ii) les additifs supplémentaires peuvent être au moins un sélectionné dans le groupe constitué de lubrifiant, antioxydant, agent de démoulage, modificateur de résistance aux chocs, stabilisant thermique, photostabilisant, plastifiant, tensioactif, agent de nucléation, agent de couplage, agent antimicrobien, agent antistatique, et toute combinaison de ceux-ci.

8. Film d'isolation selon l'une quelconque des revendications 1 à 7, dans lequel le film a une épaisseur comprise dans une plage de 50 µm à 600 µm, plus préférablement dans une plage de 100 µm à 400 µm, le plus préférablement dans une plage de 150 µm à 300 µm.

9. Film d'isolation selon l'une quelconque des revendications 1 à 8, dans lequel l'une des conditions suivantes
(i) ou (ii) s'applique :
(i) le film a une rigidité diélectrique supérieure à 40 KV/mm mesurée à l'état conditionné à température ambiante selon la norme IEC 60243-1 dans un liquide ester Midel 7131 ; ou
(ii) le film a une rigidité diélectrique supérieure à 70 KV/mm mesurée à l'état sec à température ambiante selon la norme IEC 60243-1 dans un liquide ester Midel 7131.

10. Film d'isolation selon l'une quelconque des revendications 1 à 8, dans lequel le film a une rigidité diélectrique supérieure à 40 KV/mm mesurée à l'état sec à 150 °C selon la norme IEC 60243-1 dans un liquide ester Midel 7131.

11. Film d'isolation selon l'une quelconque des revendications 1 à 10, dans lequel le film présente une chute de rigidité diélectrique à 150 °C d'au plus 45 % par rapport à la rigidité diélectrique à température ambiante mesurée à l'état sec selon la norme IEC 60243-1 dans un liquide ester Midel 7131.

12. Utilisation d'une composition à base de polyamide dans la préparation d'un film d'isolation, dans laquelle le film d'isolation comprend :
A) de 69 à 89,9 % en poids d'un polyamide,
B) de 10 à 25 % en poids d'un agent ignifuge,
C) de 0,1 à 1,0 % en poids d'un neutralisant d'acide,
D) de 0 à 5 % en poids d'additifs supplémentaires,
où le pourcentage total en poids des composants A) à D) est de 100 %.

13. Utilisation selon la revendication 12, dans laquelle des granulés préparés à partir d'une composition à base de polyamide ayant les mêmes composants que le film d'isolation sont extrudés, puis refroidis pour obtenir un film d'isolation ou un film non étiré.

14. Utilisation selon l'une quelconque des revendications 12 et 13, dans laquelle une, deux ou les trois conditions suivantes (i), (ii) et/ou (iii) s'appliquent :
(i) étirement du film non étiré en un film d'isolation ;
(ii) étirement du film non étiré, puis thermofixation et refroidissement pour obtenir un film d'isolation ; et/ou
(iii) les granulés sont de préférence fondus à une température de 280 à 340 °C puis extrudés à la vis en un film d'une épaisseur de 50 à 600 µm.

15. Utilisation du film d'isolation selon l'une quelconque des revendications 1 à 11, pour la fabrication de composants dans des systèmes électriques et électroniques, des automobiles à nouvelles énergies et des pièces d'isolation électrique pour moteurs.
